# EUROPEAN PATENT SPECIFICATION

(11) **EP 1 584 466 B1**
(45) Date of publication and mention of the grant of the patent: **13.03.2013**
(21) Application number: 05006573.9
(22) Date of filing: 24.03.2005
(51) Int. Cl.: B32B 27/32

(54) **Composite films**
Kompositfilme
Feuilles composites

(30) Priority: 08.04.2004 IT MI20040701
(43) Date of publication of application: 12.10.2005
(73) Proprietor: Irplast S.p.A., 50053 Empoli (FI) (IT)
(72) Inventor: Berlinguer, Riccardo, 20100 Milano (IT); Tiberini, Giuseppe, 66010 Gessopalena Chieti (IT); Ballico, Enrico, 00040 Marino Roma (IT)
(74) Representative: Sama, Daniele

(56) References cited:
- EP-A- 0 312 288
- GB-A- 2 296 465
- US-B1- 6 391 425

## Description

The present invention relates to composite films to be used in the masking of manufactured articles having flat surfaces, for example sheets of glass; metal; plastic. Examples of plastic materials are thermoplastic polymers as, for example, polymers having an acrylic basis, for example polymethylmethacrylate; polycarbonate; polystyrene; polyolefins; polyamides, polyesters, for example polyethylenterephthalate; polyvinylchloride; etc.

More specifically the present invention relates to simultaneously oriented multilayer composite films formed by a core of propylene homopolymer or propylene copolymer with ethylene and by an adhesive skin polarized at the surface, comprising ethylene copolymers with alpha olefins from C₃ to C₁₂, or by ethylene/vinylacetate (EVA) copolymers.

In the prior art it is known to coat manufactured articles, in particular flat surface sheets with protective films to avoid surface damages as scratches, abrasions, point damages, etc. For example polymers as polymethylmethacrylate (PMMA) and polycarbonate are industrially manufactured under the form of large size sheets and various thicknesses, for example 2 x 3 metres and thickness from 2 to 15 mm. These sheets are used by transformers to obtain various manufactured articles as, for example, skyligths, windscreens, signs, protective screens, sanitary articles or kitchenware by post-treatment as cutting and/or thermoforming. Said sheets are treated, for example when they are subjected to thermoforming, together with the protective film layer. This allows to prolong the sheet protection during the thermoforming operations up to the transport and the storage of the optional thermoformed article.

In the prior art it is known for the masking of said sheets to use polyethylene-based films, generally prepared by extrusion on blown film lines or on cast lines. For the application to the sheets, these films are stretched at temperatures between 20°C and 100°C in the reel unwinding direction, generally corresponding to the machine direction. The masking is carried out by placing the film reel, of the same width as the surface to be masked, so that the reel unwinding direction coincides with the sheet feed direction. The film is made to adhere to the surface of the manufactured article by a pressure roller, generally by using a pressure from 1-6 bar and a speed generally between 0.5 and 15 m/min. The applied film adheres to the sheet. The film is removed from the manufactured article when the sheet has undergone the above mentioned post-treatmentns, for example thermoforming, etc. During the film application to the sheet, the protective film is then subjected to a certain tension. Folds or bubbles can be produced between the film and the sheet. When the sheet undergoes post treatments for obtaining the final articles, for example by thermoforming treatments, said folds or bubbles cause surface defects such as to render unmarketable the final manufactured article. To avoid this inconvenience it is necessary to apply to the film a greater tension in the machine direction (MD) which however causes an elongation which is only partially maintained by the film. As a consequence, during the storage the partial detachment of the film from the surface of the manufactured article takes place. Under these conditions the film adhesion to the sheet is no longer optimum and the film can be removed, for example during the sheet transportation. Therefore the sheet is not protected any longer and can easily be ruined. Furthermore the presence on the sheet surface of areas wherein the film has no adhesion represents a drawback during the post-treatments, for example during the milling and circular blade cutting. During these operations the unadhered film portion can wind round the mill or on the cut blade, bringing to stop the cut treatment to remove the film. To avoid these drawbacks it is necessary to increase the minimum film thickness, thereby in the polyethylene-based films of the prior art thicknesses of 60 µm or higher are generally used. In case of PMMA sheets the thickness of the protective polyethylene film is generally of 60 µm or higher for sheets of 2 x 3 metres and thickness from 2 to 10 mm. After the removal from the sheet the film is not usable any longer and the amounts of this material to be disposed are remarkable owing to the high film thickness.

GB-A-2 296 465 discloses an oriented polyolefin multilayer film having good antiblock characteristics, comprising a base layer containing polypropylene and at least one outer layer that includes a mixture of two antiblock additives. The polymer forming the outer layer is preferably a polyolefin and the following polyolefin polymers are mentioned: linear low density polyethylene; low density- medium density- and high density-polyethylene; polypropylene, polybutene-1, ethylene/propylene copolymers, ethylene/butene-1 copolymers, ethylene propylene/butene-1 terpolymers. A second outer layer can be present on the other side of the base layer having the same or substantially the same composition as the first outer layer. The biaxially oriented film used in the examples is subjected to corona discharge treatment.

EP-A-312 288 discloses a biaxially oriented and coextruded multilayered film comprising polypropylene as core layer and LLDPE as outer layer, the LLDPE having an MFI of at least 4 (claim 1) and having a density of 0.917-0.924. The film can be corona discharge treated.

US-B1-6 391 425 discloses an embossed cast coextruded polyolefin film or an embossed oriented coextruded polyolefin film comprising: (a) a core layer comprising a propylene polymer, having on on side (b) an embossed outer layer, layer said embossed outer layer comprising an olefin polymer, and on the other side (c) an additional outer layer. Both (b) and (c) comprise an olefin polymer. The olefin polymers of layer b) can be the following: ethylene-propylene-butylene (EPB) terpolymers or ethylene-propylene (EP) copolymers, metallocene catalyzed polyethylenes, syndiotactic polypropylenes, propylene-butylene random copolymers and blends thereof the additional outer layer (c) include HDPE, polypropylene homopolymer, EPB terpolymer, propylene-butylene copolymer, LLDPE or a blend of this materials. The embossed outer layer (b) and/or the additional outer layer (c) are flame or corona discharge treated. The film can be metalized on one or both outer layers to produce final films suitable for various applications including, prismatic or holographic packaging materials.

The need was felt to have available a film for the masking of manufactured articles having flat surface, in particular polymeric sheets, preferably thermomoldable, having the following combination of properties:
- reduced thicknesses, lower than 50 µm, in particular lower than 35 µm;
- improved dimensional stability of the film subjected to hot tensions;
- good adhesion to the surface to be protected;
- thermoformability of the sheets coated with the protective film;
- easy removal of the protective film, when the final article has been obtained from the sheet; the film during this operation must not break to avoid that the operators have to intervene risking to damage the surface;
- controlled slip properties of the film so that the sheets can be piled up without risking to slide;
- printability of the protective film;
- good film transparency to allow an easy control of possible defects on the sheet surface to avoid the sheet use to prepare articles which should be discarded.

An object of the present invention is a simultaneously bioriented coextruded film, formed of the following layers:
a) a core layer of propylene homopolymer or propylene copolymer with ethylene and/or alpha olefins from 4 to 8 carbon atoms, having a MFI (Melt Flow Index, ISO 1133, 230°C/10') of at least 1.5 up to 10 g/10 min, preferably 2-4 g/10 min;
b) an adhesive skin layer, comprising ethylene copolymers with alpha olefins from C₃ to C₁₂, preferably from C₄ to C₈, having density (ASTM 792) from 0.887 g/cm³ to 0.916 g/cm³, or by ethylene copolymers with vinylacetate (EVA) wherein the vinyl acetate monomer ranges from 2% to 14% by moles, said ethylene copolymers having MFI (ASTM D 1238, 190°C/2.16 Kg) from 1 to 10, preferably from 2 to 6 g/10 min;
the adhesive skin layer b) being polarized at the surface.

The polarization of the adhesive layer b) can be obtained, for example, by corona treatment or plasma treatment.

The total film thickness is in the range 15 µm - 50 µm, preferably 15 µm - 35 µm, still more preferably 20 µm 30 µm. The thickness of the adhesive layer b) ranges from 5% to 30%, preferably 5%-20%, more preferably 5%-10% with respect to the total thickness of the film.

The amount of the comonomers in the propylene copolymers used in a) ranges from 0.1% to 40% by weight, preferably from 0.1% to 15% by weight. The alpha olefins from 4 to 8 carbon atoms are, for example, butene-1, hexene-1, 4-methyl-pentene-1, octene-1.

The polymers used in the layer a) are commercially available. The one known with the trademark Moplen®HP522H (Basel) can for example be mentioned. Preferably as core a) propylene homopolymer is used.

The ethylene copolymers of the adhesive layer b) are preferably ethylene copolymers with C₄, C₆ and C₈ alpha olefins and are preferably obtained by using in polymerization metallocene-based catalysts. See for example patent WO 91/11488 describing catalysts based on organometal coordination compounds which are cyclopentadienyl derivatives of a metal of the group 4b of the periodic table and comprise mono-, di- and tri-cyclopentadienyl compounds and derivatives thereof of the transition metal, with a cocatalyst, preferably
2a) alumoxanes, which are the reaction products of aluminum trialkyls with water. As cocatalyst instead of alumoxanes it can be used the component
2b)

   (L₁ -H) ⁺ (A)⁻
wherein (A)⁻ is a compatible not coordinating anion, preferably it is

(B Q_{q})⁻

wherein L₁ is a neutral Lewis base,
(L₁-H)⁺ is a Bronsted acid,
B is an element of the group from IIIa to VIa of the Periodic Table of the elements with metalloid properties, preferably boron, phosphor or arsenic in the valence state 3 or 5, silicon, more preferably boron in the valence state 3;
Q, equal to or different from each other, are selected from the following groups: hydrides, halides, alkyls, aryls optionally substituted, for example, with halogens, preferably F, alkoxides, aryloxides, dialkylamido, or R₀COO⁻ wherein R₀ ranges from 1 to 20 carbon atoms, with the proviso that Q can be equal to halide only once;
q is an integer equal to the valence of B plus 1.
The molar ratio of Al of the component 2a) alumoxane with respect to the metal amount of the catalyst 1 (metallocene) is in the range 10,000:1-100:1, preferably 5,000:1-500:1. In case of the boron compound (2b) the preferred ratio is in the range (0.1-4):1, more preferably (0.5-2.0):1.

The polymerization methods to obtain these polymers are well known in the prior art, see for example those indicated in patent WO 91/11488.

The comonomers usable to prepare the ethylene copolymers of the layer b) are for example butene-1, hexene-1, 4-methylpentene-1, octene-1. Examples of said commercially known copolymers are those with the trademarks AFFINITY® PL 1880 and AFFINITY® PL 1850 (DOW).

The ethylene vinylacetate copolymers are for example GREENFLEX® (POLYMERS EUROPE).

The coextruded film of the present invention can optionally be added with a not adhesive skin layer d), placed on the free surface of the layer a) (core) to improve the film thickness uniformity.

The thickness of the non adhesive skin layer d) ranges from 5% to 30%, preferably 5%-20%, more preferably 5%-10% with respect to the total film thickness. The total film thickness of the present invention comprising also the layer d) is in the limits as defined above.

The non adhesive skin layer d) is formed of propylene homopolymer or copolymer with ethylene and/or alpha olefins from 4 to 8 carbon atoms, having a MFI (ISO 1133, 230°C/10 min) from 2 to 10 g/10 min. The propylene/ethylene copolymers and/or alpha olefins from 4 to 8 carbon atoms used in d) have a comonomer content from 0.1% to 40% by weight, preferably from 0.1% by weight to 15% by weight.

The polymers used in the layer d) are commercially available. The one known as Stamylan®P 15E10FB (DSM) can for example be mentioned here.

The core a) can be formed by one layer or more layers using the polymers and copolymers indicated in a).

To the films of the present invention conventional additives used in plastic materials as for example slip agents, anti-blocking agents, antistatics, dyes, protectors from UV rays, can be added.

The simultaneously bioriented coextruded films of the present invention are obtainable with a process on a line comprising:
- extruder of core a), for example of twin- or single-screw in sequence, said extruder equipped with vacuum pump for gas removal and feeding pump to stabilize the flow-rate at the output;
- single- and twin- screw coextruders for the layers b) and optionally d);
- multilayer extrusion die to obtain a composite sheet formed by the layers a), b) and optionally d);
- quenching roll of the sheet, obtainable for example by dipping the roll in a water bath;
- sheet preheating system, preferably at infrared rays;
- sheet simultaneous stretching oven, having the following sections, in the fed direction of the sheet: preheating section, simultaneous stretching section, stabilization section, cooling section;
- equipment for the polarization of the layer b) of the obtained film, for example an equipment for corona or plasma treatment.

The process to obtain the simultaneously bioriented coextruded films of the present invention comprises the following steps:
- preparation of a composite sheet, preferably having a thickness between about 1.5 mm and 3.3 mm, by coextrusion of the layer a), b) and optionally d) preferably on a cast die and preferably by using temperatures in the range 160°C-270°C; and subsequent sheet quenching, preferably carried out on a roll dipped in water, preferably at temperatures of 10°C-60°C;
- sheet preheating at a temperature preferably between about 100°C and about 120°C, preferably by infrared rays;
- simultaneous stretching, in machine direction MD and in transversal direction TD of the sheet, which uses the equipment described in the basic patent US 4,853,602, herein incorporated by reference, and subsequent patents describing this technology, comprising the following steps:
   simultaneous sheet stretching and film obtaining by sheet edge catching, having a higher thickness than that of the sheet, with a series of pliers or clips, sliding on two rails, and independently driven by linear synchronous induction motors, each plier or clip sliding on one rail and being drugged by a permanent magnet or by a couple of permanent magnets, pushed by the magnetic wave created by the polar expansions of the linear engine; each section of the stretching frame having a series of linear synchronous induction motors set in a contiguous way, fed with alternating currents with modulated phase and frequency, to continuously vary the clip speed and the relative speeds among them and therefore the film longitudinal stretching ratios; the transversal stretching ratio being regulated by intervening on the rail divergence on which the pliers and the clips slide;
   the stretching frame comprises one or more sections placed inside an oven having temperatures in the range of about 150°C-190°C, and one or more sections placed in an oven at temperatures between about 130°C and 140°C; generally the longitudinal stretching ratios being in the range of about 4:1 and about 9:1, preferably from 5.5:1 to 8.5:1, and the transversal stretching ratios in the range of about 3:1 and about 8.5:1, preferably from 5.5:1 to 8.5:1;
- polarization of the layer b) of the obtained film.

The temperatures in the above mentioned apparatus parts are selected so as to optimize the biaxial orientation of the polymeric chains of the used polymers; in first approximation the longitudinal stretching ratio can be considered equal to the ratio between the film outlet rate from the stretching frame (correlated to the frequency of the current fed to the linear motors of the last section of the stretching frame) and the film inlet speed in the stretching frame (correlated with the frequency of the current fed to the linear motors of the first section of the stretching frame); the transversal stretching ratio can be considered in first approximation equal to the ratio between the film width at the stretching frame outlet and the film width at the stretching frame inlet.

The "corona" treatment of the adhesive layer b) is preferably carried out with high frequency electric discharges preferably having intensity of 40-60 W/cm.

The Applicant has found that the films according to the present invention cannot be produced on lines wherein the stretching in the two directions is carried out in two distinct steps, i.e. the simultaneous stretching in the two directions is not carried out. See the Examples.

The films according to the present invention have the advantage to have a reduced thickness with respect to the polyethylene film of the prior art. Furthermore they have the advantage to have improved mechanical properties compared with the polyethylene films of the prior art.

It has furthermore been found by the Applicant that the films of the present invention show an improved transparency compared with the polyethylene films used up to now. See the Examples. This allows to directly control the quality of the manufactured article through the protective film without removing it. This would bring to the risk of the sheet damage during the successive operations on the sheet for obtaining the final article.

The films of the present invention, as said, are used in the protective coating of manufactured articles having flat surfaces. For the application of the protective coating the invention films are stretched at temperatures comprised between 20°C and 100°C in the machine direction. The protective coating is carried out by putting the film reel, of the same width of the surface to be coated, so that the reel unwinding direction coincides with the sheet feed direction. The film is made to adhere to the surface of the manufactured article by the adhesive layer b) by a pressure roller, generally using a pressure from 1-6 bar, the line rate being generally between 0.2 and 15 m/min. The application is contemporaneously carried out also on the other sheet surface, and the pressure roller used rotates in the opposite direction to the preceding roll.

During the application, also in a continuous process, folds or bubles do not form between the film and the sheet. The sheets covered with the invention film during the storage, even after 6 months, do not show partial detachment of the film from the sheet surface. The protective film results well anchored to the sheet surface and is not removed during the sheet handling.

This represents and advantage of the films of the present invention compared with the films at present used, for example the polyethylene films, for the sheet coating. In fact it is known that if the films at present used, for example polyethylene films, are partially detached when the sheets are in a vertical position, during the subsequent storage period of time they completely detach, even if the detached part was repositioned on the sheet.

The Applicant has unexpectedly and surprisingly found that this drawback does not take place when using the films of the present invention. It has been found that if one part of the film detaches, it is sufficient to reposition it on the sheet. No subsequent detachment is observed during the subsequent storage period of time, which can also be of several months, for example 6 months.

Even after sheet thermoforming no surface defects are observed on the final article and the protective film remains well sticking and integral. As already said, the invention films have the advantage, compared with the films of the prior art, to give the above peformances at thickness values even much lower than 60 µm. For example thicknesses of 30 µm give even improved performances compared with those of the prior art films. After the sheet removal, as said, the protective film is not usable any longer, but in case of the films of the present invention the amount to be disposed is clearly lower, since already films of 30 µm give satisfactory performaces. Of course also the films of the present invention can be used even at higher thicknesses, for example 50 µm. However in this case the production costs are higher and the material to be disposed increases.

During the application to the manufactured article, the present invention films can be subjected to a mechanical stress higher than that of the prior art films, without noticing deformations.

As said, the present invention films for the protective coating of flat surface manufactured articles, in particular thermoformable sheets, have the following combination of properties: reduced thicknesses, lower than 50 µm, in particular lower than 35 µm; improved dimensional stability of the film subjected to hot stretching; good adhesion to the surface to be protected; thermoformability of the sheets coated with the protective film; easy removal of the film when the final manufactured article has been obtained from the sheet, the film during this operation must not break to avoid that the operators have to intervene risking to damage the surface; controlled film sliding so that the sheets can be piled up without risking to slide; printability of the protective film; good transparency to allow an easy control of possible defects on the sheet surface to avoid the sheet use to form articles which shoud be to remove.

The manufactured articles having flat surfaces, as said, are for example, glass, metal and polymeric material sheets. Examples of polymeric materials are thermoplastic polymers as, for example, polymers having an acrylic basis, for example polymethylmethacrylate; polycarbonates; polystyrene; polyolefins; polyamides; polyesters, for example polyethyleneterephthalate, polyethylenterephthalate glycol; polyvinylchloride; etc.

The polyolefins are, for example, polyethylene; polypropylene; ethylene-propylene copolymers; ethylene copolymers with C₃-C₁₂ alpha-olefins; propylene copolymers with ethylene and/or C₄-C₈ alpha-olefins; ethylene-vinyl acetate copolymers, ethylene-styrene copolymers. Also manufactured articles of thermoplastic elastomers can be coated with the films of the present invention.

Manufactured articles of thermosetting polymers, for example ethylene/propylene type elastomers, elastomers having a styrene basis, for example styrene/butadiene polymers, epoxy resins, can also be coated.

It has furthermore been found by the Applicant that the films of the present invention show a better resistance to abrasion, to puncturation, to the scratch in general. For example invention films having a thickness of about 30 micrometers give a very good resistance to the scratch of polymethyl-methacrylate sheets even having a high thickness, for example 10 mm, overlapped during the storage. Tests carried out by the Applicant have instead shown that the polyethylene films used on trade for coating sheets must have a thickness of at least 60 micrometers to have a good scratch resistance. Polyethylene films of 30 micrometers are not suitable.

The Applicant has also found that the films of the present invention have an improved barrier property towards the moisture. Therefore the sheets can be coated with the ffilms of the present invention in every part: length, width and depth.

The following Examples illustrate with non limitative purposes the present invention.

### EXAMPLES

### Film characterization

- Elongation at break, stress at break and modulus are determined according to ASTM D 882.
- The Haze determination on the film is carried out according to ASTM D 1003-97.
- The deformation coefficient is determined according to the ASTM D 882 method, by applying to the film a strength equal to 10 MPa.
- Adhesion test

The adopted test is a modification of the test 4001 "Peel adhesion of adhesive tape on stainless steel" by European Association for the Self Adhesive Tape Industry (AFERA).

The adhesion of the applied film is evaluated with the method herein described, after 24 hours from the film application on the sheet and subsequent storage of the coated sheet under standard conditions (25°C, relative humidity 50%).

The sheet protected by the film is cut in rectangular specimens having 5 x 15 cm sizes. One specimen is vertically fixed in a dynamometer clip. On one of the specimen sides the film is detached and fixed to the other dynamometer clip, which is mobile. This clip is vertically moved upward with a 30 mm/min rate so that the film detaches according to an angle of 180°C with respect to the specimen surface. The weight force necessary to detach the film is measured.

### EXAMPLE 1

### Preparation of the coextruded film

A coextruded film was prepared with the composition mentioned hereunder, simultaneously bioriented by using the above mentioned simultaneous biaxial stretching process, working under the following conditions:
- layer a) extruder temperature from 250°C to 270°C; rpm extruder 160 rpm;
- layer d) extruder temperature from 250°C to 270°C; rpm extruder 19 rpm;
- layer b) extruder temperature from 210°C to 250°C; rpm extruder 38 rpm;
- die temperature 250°C;
- temperature of the roll and of the quenching bath 30°C;
- temperature of the preheating unit at IR rays from 100°C to 320°C;
- temperature of the stretching oven from 160°C to 170°C;
- equipment power for the corona treatment 50 W/cm.

The following stretching parameters are used on the line: longitudinal stretching ratio from 4.5 to 6; transversal stretching ratio from 6.0 to 9.
The coextruded film has the following composition:
d) skin layer: polypropylene homopolymer having MFI = 3, commercially known with the trademark Stamylan®P 15E10FB (DSM), thickness 0.8 µm,;
a) core layer: polypropylene homopolymer MFI = 2, commercially known with the trademark Moplen®HP522H;
b) adhesive layer: EVA, vinylacetate percentage 2.5% by moles, MFI = 2.2, thickness 0.8 µm.

The film total thickness is 30 *µ*m.

The surface of the film layer b) is treated with electric high frequency discharges ("corona" treatment) having intensity of 50 W/cm.

The following mechanical properties were determined on the film in machine or longitudinal direction:
- elongation at break;
- stress at break;
- elastic modulus;
- deformation coefficient.

The Haze value was determined.

The adhesion test was caried out and it was found that the film detaches at a weight force equal to 42 g.

The results are reported in Table 1.

### EXAMPLE 2

The Example 1 is repeated but using for the surface layer b) an ethylene/octene-1 copolymer havaing MFI = 3.0 and density 0.902 g/cm³, commercially known with the trademark AFFINITY® PL 1850. The film total thickness is of 30 µm.

The surface of the layer b) is treated as in the Example 1.

The same properties mentioned in the Example 1 were determined on the film.

The results are reported in Table 1.

The adhesion test was carried out and it was found that the film detaches at a weight force equal to 27 g.

### EXAMPLE 3 (comparative)

A layer coextruded film, non oriented, is used, having the following composition:
- core layer: formed by LDPE (low density polyethylene) which can be in admixture with LLDPE (linear low density polyethylene) or MDPE (medium density polyethylene);
- the surface adhesive layer is constituted of m-VLDPE (metallocene very low density polyethylene).

The film total thickness is 60 µm.

The adhesive layer surface is treated with electric high frequency discharges ("corona" treatment).

The same properties indicated in the Example 1 were determined.

The results are reported in Table 1.

### Comment to Table 1.

The Table shows that the films according to the present invention show improved mechanical properties compared with the prior art films with a thickness corresponding to the half of that of the comparative film.

The Table shows that the films according to the present invention show elastic modulus values higher than those of the comparative film. Therefore during the application to the manufactured article, the films of the present invention can be subjected to a mechanical stress higher than that of the comparative film, without noticing deformations even if the film thickness, as said, is the half of the comparative one. Furthermore the Haze value is lower for the films according to the present invention.

### EXAMPLE 4 (comparative)

A conventional two-step stretching line or sequential stretching was used (stretching in MD followed by stretching in TD) to produce a bioriented coextruded film with the composition of the Example 1.

The conventional two-step stretching line is formed of the following units:
- extruder of the core layer a) of single screw type in sequence;
- single screw coextruders for the layers b) and d);
- multilayer extrusion die;
- quenching roll dipped in a water bath;
- preheating system at infrared rays;
- longitudinal stretching system, called MDO, constituted of rolls heated at a variable rate, said system comprising preheating, longitudinal stretching and stabilization sections;
- transversal stretching system, called TDO, constituted of a system of pliers mounted on two divergent side chains, which works by catching the side ends of the film, said system is placed in an oven subdivided in the preheating, transversal stretching, stabilization and cooling sections;
- equipment for the corona treatment.

The sequential stretching process is carried out by operating with the above line under the following conditions:
- layer a) extruder temperature from 250°C to 270°C; rpm extruders 140 rpm;
- layer d) extruder temperature from 250°C to 270°C; rpm extruder 21 rpm;
- layer b) extruder temperature from 210°C to 250°C; rpm extruder 33 rpm;
- die temperature 250°C;
- roll and quenching bath temperature 30°C.

It was noticed that when the sheet enters the MDO equipment, it is not possible to carry out the longitudinal stretching. At the temperature of 150°C the sheet is stretched but the layer b) softens and is damaged by the rolls. To avoid this drawback, the stretching was repeated at lower temperatures, down to the lower stretchability limit of the film (90°C) without being able to avoid the damage.

### EXAMPLE 5

The film of the Example 1 is applied in the protective coating of flat polymethylmethacrylate sheets having sizes 2.10 m and heigth 5 mm, on both surfaces. For the application the films are stretched. The film application is carried out on a sheet at a sheet temperature between 60°C and 80°C.

The protective film results well sticking to the sheet to be protected and no folds or bubbles are observed between the film and the sheet.

The sheet coating process has continued for two hours in a continuous process wherein the sheets are fed in a continuous way at the rate of 1 m/min. In the coated sheet the protective film results well sticking and no folds or bubbles are noticed between the film and the sheet.

### EXAMPLE 6

The Example 5 was repeated but using the film of the Example 2.

The protective film results well sticking to the sheet and no folds or bubbles are noticed between the film and the sheet.

### EXAMPLE 7 (comparative)

The Example 5 was repeated but by using the polyethylene film of the Example 3 (comparative) having a thickness of 60 µm .

The protective film results well sticking to the sheet and no folds or bubbles are noticed between the film and the sheet.

It is observed that compared with the films of the invention, the material to be disposed in this case is in double amount.

### EXAMPLE 8 (comparative)

The Example 7 (comparative) was repeated but by using the polyethylene film, having the composition of that of the Example 3 (comparative) but thickness 30 µm.

The protective film does not result well sticking to the sheet and folds or bubbles are noticed between the film and the sheet, furthermore the film does not cover the whole sheet surface.

Therefore a polyethylene film having a thickness of 30 µm is not suitable to be used as coating film of manufactured articles having flat surfaces.

**Table 1**

| Coextruded films obtained in the Examples 1-2 and 3 comp.: thickness; elongation at break, stress at break and elastic modulus measured in MD | | | |
|---|---|---|---|
| | Ex. 1 | Ex. 2 | Ex. 3 comp. |
| thickness (*µ*m) | 30 | 30 | 60 |
| elongation at break (%) | 90 | 100 | 350 |
| stress at break (MPa) | 190 | 185 | 20 |
| modulus (MPa) | 2300 | 2400 | 500 |
| deformation coefficient | <1% | <1% | <5% |
| Haze | 2.06 | 2.20 | 9.88 |

## Claims

1. A simultaneously bioriented coextruded film, formed by the following layers:
a) a core layer of propylene homopolymer or propylene copolymer with ethylene and/or alpha olefins from 4 to 8 carbon atoms, having a MFI (Melt Flow Index, ISO 1133, 230°C/10 min) of at least 1.5-10 g/10 min, preferably 2-4 g/10 min;
b) an adhesive skin layer, constituted by ethylene copolymers with alpha olefins from C₃ to C₁₂, preferably from C₄ to C₈, having density, (ASTM 792) from 0.887 g/cm³ to 0.916 g/cm³, or by ethylene copolymers with vinylacetate (EVA) wherein the vinyl acetate monomer ranges from 2% to 14% by moles; said ethylene copolymers having MFI (ASTM D 1238, 190°C/2.16 Kg) from 1 to 10, preferably from 2 to 6 g/10 min;
the adhesive skin layer b) being polarized on the surface,
d) a non adhesive skin layer, placed on the free surface of the layer a), formed by propylene homopolymer or copolymer with ethylene and/or alpha olefins from 4 to 8 carbon atoms, having a MFI (ISO 1133, 230°C/10 min) from 2 to 10 g/10 min; having said propylene/ethylene copolymers and/or alpha olefins from 4 to 8 carbon atoms a comonomer content from 0.1% to 40% by weight, preferably from 0.1% by weight to 15% by weight.

2. A coextruded film according to claim 1, wherein the polarization of the adhesive layer b) is obtained by corona treatment or plasma treatment.

3. A coextruded film according to claims 1-2, wherein the film total thickness is in the range 15 µm-50 µm, preferably 15 µm-35 µm, still more preferably 20 µm-30 µm; the thickness of the adhesive layer b) ranges from 5% to 30%, preferably 5%-20%, more preferably 5%-10% with respect to the total thickness of the film.

4. A coextruded film according to claims, 1-3, wherein the amount of the comonomers in the propylene copolymers used in a) ranges from 0.1% to 40% by weight, preferably from 0.1% to 15% by weight.

5. A coextruded film according to claims 1-4, wherein the ethylene copolymers of the adhesive layer b) are obtained by using in polymerization metallocene-based catalysts.

6. A coextruded film according to claim 1, wherein the thickness of the non adhesive layer d) ranges from 5% to 30%, preferably 5%-20%, more preferably 5%-10% with reespect to the film total thickness.

7. A coextruded film according to claims 1-6, wherein the core a) is constituted by one or more layers.

8. A coextruded film according to claims 1-7, wherein the additives used for plastic materials, in particular slip agents, anti-blocking agents, antistatics, dyes, protectors from UV rays, are added.

9. A process for preparing the simultaneously bioriented coextruded films according to claims 1-8, achievable on a line comprising:
- extruder of the core layer a), for example of twin- or single screw type in sequence, said extruder equipped with vacuum pump for the air removal and feeding pump to stabilize the outlet flow-rate;
- single screw or twin screw coextruders for the layers b) and d);
- multilayer extrusion die to obtain a composite sheet formed by the layers a), b) and d);
- sheet quenching roll, obtainable for example by dipping the roll in a water bath,
- sheet preheating system, preferably at infrared rays;
- sheet simultaneous stretching oven, having the following sections, in the feeding direction of the sheet: preheating section, simultaneous stretching section, stabilization section, cooling section;
- equipment for the polarization of the layer b) of the obtained film, preferably an equipment for corona treatment or plasma treatment;
the films being obtainable with a process comprising the following steps:
- preparation of a composite sheet, preferably having a thickness between about 1.5 mm and 3.3 mm, by coextrusion of the layer a), b) and d) preferably on flat die and preferably using temperatures in the range of 160°C-270°C; and subsequent sheet quenching, preferably carried out on a roll dipped in water, preferably at temperatures of 10°C-60°C;
- sheet preheating at a temperature preferably comprised between about 100°C and about 120°C, preferably by infrared rays;
- simultaneous stretching, both in machine direction MD and in transversal direction TD of the sheet, comprising the following steps:
simultaneous sheet stretching and film obtaining by catching of the sheet edges, having a higher thickness than that of the sheet, with a series of pliers and clips, sliding on two rails, and independently driven by linear synchronous induction engines, each plier or clip sliding on one rail and being driven by a permanent magnet or by a couple of permanent magnets, pushed by the magnetic wave created by the polar expansions of the linear engine; each section of the stretching frame having a series of linear synchronous induction engines set in a contiguous way, fed by alternating currents with modulated phase and frequency, in order to vary in a continuous way the clip rate and the relative rates among them and therefore the film longitudinal stretching ratios; the transveral stretching ratios being regulated by intervening on the divergence of the rails on which the pliers and the clips slide;
the stretching frame comprises one or more sections placed inside an oven having temperatures in the range of about 150°C-190°C, and one or more sections in an oven at temperatures comprised between about 130°C and 140°C; the longitudinal stretching ratios being in the range of about 4:1 and about 9:1, preferably from 5.5:1 to 8.5:1, and the transversal stretching ones in the range of about 3:1 and about 8.5:1, preferably from 5.5.1 to 8.5:1;
- polarization of the layer b) of the obtained film.

10. A process according to claim 9, wherein the polarization of the film layer b) is carried out by using an equipment for corona treatment or plasma treatment.

11. A process according to claim 10, wherein the polarization of the film layer b) is carried out by corona treatment with electric discharges having intensity of 40-60 W/cm.

12. Use of the simultaneously bioriented coextruded films according to claims 1-8 for the protective coating of manufactured articles having flat surfaces constituted by glass, metal and thermosetting polymer sheets, thermoplastic elastomers.

13. Sheets having flat surfaces comprising glass, metal sheets, thermosetting polymers, thermoplastic elastomers, coated with the films according to claims 1-8.

14. Manufactured articles obtainable from the sheets according to claim 13.

## Patentansprüche

1. Gleichzeitig biorientierte bzw. gleichzeitig in zwei Richtungen gereckte coextrudierte Folie, gebildet aus den nachstehenden Schichten:
a) einer Kern-Schicht aus Propylen-Homopolymer oder Propylen-Copolymer mit Ethylen und/oder α-Olefinen von 4 bis 8 Kohlenstoff-Atomen, mit einem MFI (Schmelz-Fließ-Index, ISO 1133, 230°C/10 min) von mindestens 1,5-10 g/10 min, vorzugsweise 2-4 g/10 min;
b) einer klebenden Haut-Schicht, aufgebaut aus Ethylen-Copolymeren mit α-Olefinen von C₃ bis C₁₂, vorzugsweise von C₄ bis C₈, mit einer Dichte (ASTM 792) von 0,887 g/cm³ bis 0,916 g/cm³, oder von Ethylen-Copolymeren mit Vinylacetat (EVA), wobei das Vinylacetat-Monomer im Bereich von 2% bis 14 Mol-% liegt, wobei die Ethylen-Copolymere einen MFI (ASTM D 1238, 190°C / 2,16 kg) von 1 bis 10, vorzugsweise von 2 bis 6 g/10 min, aufweisen;
wobei die klebende Haut-Schicht b) an der Oberfläche polarisiert ist,
d) einer nicht klebenden Haut-Schicht, die auf der freien Oberfläche der Schicht a) angeordnet ist, aus Propylen-Homopolymer oder -Copolymer mit Ethylen und/oder α-Olefinen von 4 bis 8 Kohlenstoff-Atomen, mit einem MFI (ISO 1133, 230°C/10 min) von 2 bis 10 g/10 min gebildet worden ist; wobei die Propylen / Ethylen-Copolymere und/oder α-Olefine von 4 bis 8 Kohlenstoff-Atomen einen Comonomer-Gehalt von 0,1 % bis 40 Gew.-%, vorzugsweise von 0,1 Gew.-% bis 15 Gew.-%, aufweisen.

2. Coextrudierte Folie nach Anspruch 1, wobei die Polarisation der klebenden Schicht b) durch Corona-Behandlung oder Plasma-Behandlung erhalten wird.

3. Coextrudierte Folie nach Ansprüchen 1-2, wobei die Gesamt-Dicke der Folie in dem Bereich 15 µm - 50 µm, vorzugsweise 15 µm - 35 µm, noch bevorzugter 20 µm - 30 µm, liegt; die Dicke der klebenden Schicht b) in dem Bereich von 5 % bis 30 %, vorzugsweise 5 % - 20 %, bevorzugter 5 % - 10 %, hinsichtlich der Gesamt-Dicke der Folie, liegt.

4. Coextrudierte Folie nach Ansprüchen 1-3, wobei die Menge der Comonomere in den in a) verwendeten Propylen-Copolymeren in dem Bereich von 0,1 % bis 40 Gew.-%, vorzugsweise von 0,1 % bis 15 Gew.-%, liegt.

5. Coextrudierte Folie nach Ansprüchen 1-4, wobei die Ethylen-Copolymere der klebenden Schicht b) durch Anwenden von auf Metallocen basierenden Katalysatoren bei der Polymerisation erhalten werden.

6. Coextrudierte Folie nach Anspruch 1, wobei die Dicke der nicht klebenden Schicht d) in dem Bereich von 5 % bis 30 %, vorzugsweise 5 % - 20 %, bevorzugter 5% - 10 %, hinsichtlich der Gesamt-Dicke der Folie, liegt.

7. Coextrudierte Folie nach Ansprüchen 1-6, wobei der Kern a) durch eine oder mehrere Schichten gebildet wird.

8. Coextrudierte Folie nach Ansprüchen 1-7, wobei die für Kunststoff-Materialien verwendeten Additive, insbesondere Gleitmittel, Anti-Blockier-Mittel, Antistatika, Farbstoffe, Schutzmittel vor UV-Strahlen, zugegeben werden.

9. Verfahren zur Herstellung der gleichzeitig biorientierten bzw. gleichzeitig in zwei Richtungen gereckten coextrudierten Folien nach Ansprüchen 1-8, erreichbar auf einer Fertigungsstraße, umfassend:
- Extruder der Kern-Schicht a), zum Beispiel vom Doppel-oder Ein-Schnecken-Typ in Folge, wobei der Extruder mit Vakuum-Pumpe zur Gas-Entfernung und Zuführungs-Pumpe zum Stabilisieren der Fließ-Gesch.windigkeit an der Ausgabe ausgestattet ist;
- Ein-Schnecken- oder Doppel-Schnecken-Coextruder für die Schichten b) und d);
- Mehr-Schicht-Extrusions-Düse, um eine Verbund-Werkstoff-Bahn, gebildet durch die Schichten a), b) und d), zu erhalten;
- Quench-Walze der Bahn, erhältlich zum Beispiel durch Tauchen der Walze in ein Wasser-Bad;
- Bahn-Vorheiz-System, vorzugsweise bei Infrarot-Strahlen;
- Ofen zum gleichzeitigen Verstrecken der Bahn mit den nachstehenden Abschnitten in der Zuführungs-Richtung der Bahn: Vorheiz-Abschnitt, Abschnitt zum gleichzeitigen Verstrecken, Stabilisierungs-Abschnitt, Kühl-Abschnitt;
- Ausrüstung für die Polarisation der Schicht b) der erhaltenen Folie, vorzugsweise eine Ausrüstung zur Corona-Behandlung oder Plasma-Behandlung;
wobei die Folien mit einem Verfahren erhältlich sind, umfassend die nachstehenden Schritte:
- Herstellung einer Verbund-Werkstoff-Bahn, vorzugsweise mit einer Dicke zwischen etwa 1,5 mm und 3,3 mm, durch Co-extrusion der Schicht a), b) und d) vorzugsweise auf einer Flach-Düse und vorzugsweise durch Anwenden von Temperaturen in dem Bereich von 160°C-270°C; und anschließend Bahn-Quenchen, vorzugsweise ausgeführt auf einer Walze, die in Wasser, vorzugsweise bei Temperaturen von 10°C - 60°C, getaucht wird;
- Bahn-Vorheizung bei einer Temperatur, vorzugsweise umfasst zwischen etwa 100°C und etwa 120°C, vorzugsweise durch Infrarot-Strahlen;
- gleichzeitiges Verstrecken, sowohl in MaschinenRichtung MD als auch in Quer-Richtung TD der Bahn, umfassend die nachstehenden Schritte:
gleichzeitiges Verstrecken einer Bahn und Erhalten einer Folie durch Aufnehmen der Bahn-Kanten, mit einer höheren Dicke als jene der Bahn, mit einer Reihe von Zangen und Klammern, die auf zwei Schienen gleiten, und unabhängig betrieben durch lineare synchrone Induktions-Motoren, wobei jede Zange oder Klammer auf einer Schiene gleitet und durch einen Permanent-Magneten oder durch ein Paar von Permanent-Magneten, geschoben durch die magnetische Welle, die durch die Pol-Ausdehnungen des linearen Motors erzeugt werden, angetrieben wird; wobei jeder Abschnitt des Verstreck-Rahmens eine Reihe von linearen synchronen Induktions-Motoren aufweist, die in einer zusammenhängenden Weise angeordnet sind, gespeist durch Wechselströme mit modulierter Phase und Frequenz, um in einer kontinuierlichen Weise die Klammer-Geschwindigkeit und die relativen Geschwindigkeiten unter denselben und daher die Längs-Folien-Verstreck-Verhältnisse zu variieren; wobei die Quer-Verstreck-Verhältnisse gesteuert werden durch Eingriff auf das Auseinander-Gehen der Schienen, auf denen die Zangen und die Klammern gleiten;
wobei der Verstreck-Rahmen, einen oder mehrere Abschnitte, angeordnet innerhalb eines Ofens mit Temperaturen in dem Bereich von etwa 150°C - 190°C, und einen oder mehrere Abschnitte in einem Ofen bei Temperaturen zwischen etwa 130°C und 140°C umfasst; wobei die Längs-Verstreck-Verhältnisse in dem Bereich von etwa 4 : 1 und etwa 9 : 1, vorzugsweise von 5,5 : 1 bis 8,5 : 1, liegen und die Verhältnisse des Quer-Verstreckens in dem Bereich von etwa 3 : 1 und etwa 8,5 : 1, vorzugsweise von 5,5 : 1 bis 8,5 : 1, liegen;
- Polarisation der Schicht b) der erhaltenen Folie.

10. Verfahren nach Anspruch 9, wobei die Polarisation der Schicht b) der Folie durch Anwenden einer Ausrüstung zur Corona-Behandlung oder Plasma-Behandlung ausgeführt wird.

11. Verfahren nach Anspruch 10, wobei die Polarisation der Schicht b) der Folie durch Corona-Behandlung mit elektrischen Entladungen mit einer Intensität von 40-60 W/cm ausgeführt wird.

12. Verwendung der gleichzeitig biorientierten bzw. gleichzeitig in zwei Richtungen gereckten coextrudierten Folien nach Ansprüchen 1-8 für das schützende Beschichten von hergestellten Gegenständen mit ebenen Oberflächen, hergestellt aus Glas, Metall und durch Wärme härtenden Polymer-Bahnen, thermoplastischen Elastomeren.

13. Bahnen mit ebenen Oberflächen, umfassend Glas, Metall-Bahnen, durch Wärme härtende Polymere, thermoplastische Elastomere, beschichtet mit den Folien nach Ansprüchen 1-8.

14. Hergestellte Gegenstände, erhältlich aus den Bahnen nach Anspruch 13.

## Revendications

1. Film simultanément coextrudé et biorienté, formé par les couches suivantes :
a) une couche centrale d'homopolymère de propylène ou de copolymère de propylène avec de l'éthylène et/ou des alpha-oléfines de 4 à 8 atomes de carbone, ayant un MFI (indice de fluidité, norme ISO 1133, 230 °C/10 min) d'au moins 1,5 à 10 g/10 min, de préférence de 2 à 4 g/10 min ;
b) une couche pelliculaire adhésive se compose de copolymères d'éthylène avec des alpha-oléfines en C₃ à C₁₂, de préférence en C₄ à C₈, ayant une masse volumique (norme ASTM 792) de 0,887 g/cm³ à 0,916 g/cm³, ou par des copolymères d'éthylène avec de l'acétate de vinyle (EVA) où le monomère d'acétate de vinyle est compris dans la plage allant de 2 % à 14 % en moles, lesdits copolymères d'éthylène ayant un MFI (norme ASTM 1238, 190 °C/2,16 kg) de 1 à 10, de préférence de 2 à 6 g/10 min ;
la couche pelliculaire adhésive b) étant polarisée sur la surface,
d) une couche pelliculaire non adhésive placée sur la surface libre de la couche a), formée par un homopolymère ou un copolymère de propylène avec de l'éthylène et/ou des alpha-oléfines de 4 à 8 atomes de carbone, ayant un MFI (norme ISO 1133, 230 °C/10 min) de 2 à 10 g/10 min ; lesdits copolymères de propylène/éthylène et/ou des alpha-oléfines de 4 à 8 atomes de carbone ayant une teneur en comonomères de 0,1 % à 40 % en poids, de préférence de 0,1 % en poids à 15 % en poids.

2. Film coextrudé selon la revendication 1, dans lequel la polymérisation de la couche adhésive b) est obtenue par traitement corona ou traitement au plasma.

3. Film coextrudé selon les revendications 1 à 2, dans lequel l'épaisseur totale du film est comprise dans la plage allant de 15 µm à 50 µm, de préférence de 15 µm à 35 µm, encore plus préférablement de 20 µm à 30 µm ; l'épaisseur de la couche adhésive b) est comprise dans la plage allant de 5 % à 30 %, de préférence de 5 % à 20 %, plus préférablement de 5 % à 10 % par rapport à l'épaisseur totale du film.

4. Film coextrudé selon les revendications 1 à 3, dans lequel la quantité des comonomères dans les copolymères de propylène utilisés dans a) est comprise dans la plage allant de 0,1 % à 40 % en poids, de préférence de 0,1 % à 15 % en poids.

5. Film coextrudé selon les revendications 1 à 4, dans lequel les copolymères d'éthylène de la couche adhésive b) sont obtenus en utilisant pour la polymérisation des catalyseurs à base de métallocène.

6. Film coextrudé selon la revendication 1, dans lequel l'épaisseur de la couche non adhésive d) est comprise dans la plage allant de 5 % à 30 %, de préférence de 5 % à 20 %, plus préférablement de 5 % à 10 %, par rapport à l'épaisseur totale du film.

7. Film coextrudé selon les revendications 1 à 6, dans lequel la couche centrale a) se compose d'une ou plusieurs couches.

8. Film coextrudé selon les revendications 1 à 7, dans lequel des additifs utilisés pour les matériaux plastiques, en particulier les agents de glissance, les agents antibloquants, les agents antistatiques, les colorants, les agents de protection contre les rayons UV, sont ajoutés.

9. Procédé de préparation des films simultanément coextrudés et biorientés selon les revendications 1 à 8, pouvant être obtenus sur une ligne comprenant :
- une extrudeuse de la couche centrale a), par exemple de type à une ou deux vis en séquence, ladite extrudeuse étant équipée d'une pompe à vide pour éliminer l'air et d'une pompe d'alimentation pour stabiliser le débit de sortie ;
- des co-extrudeuses à une vis ou deux vis pour les couches b) et d) ;
- une filière d'extrusion multicouche pour obtenir une feuille composite formée par les couches a), b) et d) ;
- un rouleau de trempe de la feuille pouvant être obtenu par exemple par l'immersion du rouleau dans un bain d'eau ;
- un système de préchauffage de la feuille, de préférence à rayons infrarouges ;
- un four d'étirage simultané de la feuille, ayant les sections suivantes, dans le sens de l'alimentation de la feuille : une section de préchauffage, une section d'étirage simultané, une section de stabilisation, une section de refroidissement ;
- un équipement pour la polymérisation de la couche b) du film obtenu, de préférence un équipement pour un traitement corona ou un traitement au plasma ;
les films pouvant être obtenus par un procédé comprenant les étapes suivantes :
- préparation d'une feuille composite, de préférence ayant une épaisseur comprise entre environ 1,5 mm et 3,3 mm, par coextrusion des couches a), b) et d) de préférence sur une filière plate et de préférence en utilisant des températures comprises dans la plage allant de 160 à 270 °C ; suivie par une trempe de la feuille, de préférence réalisée sur un rouleau immergé dans de l'eau, de préférence à des températures de 10 °C à 60 °C ;
- préchauffage de la feuille à une température de préférence comprise entre environ 100 °C et environ 120 °C, de préférence par rayons infrarouges ;
- étirage simultané, à la fois dans le sens machine MD et dans le sens transversal TD de la feuille, comprenant les étapes suivantes :
étirage simultané de la feuille et obtention d'un film en attrapant les bords de la feuille, ayant une épaisseur supérieure à celle de la feuille, avec une série de pinces et de bagues, qui coulissent sur deux rails et indépendamment entraînés par des moteurs à induction linéaires synchrones, chaque pince ou bague coulissant sur un rail et étant entraîné par un aimant permanent ou par un couple d'aimants permanents, poussés par l'onde magnétique créée par les expansions polaires du moteur linéaire ; chaque section du cadre d'étirage comprenant une série de moteurs à induction linéaires synchrones montés de manière contiguë, alimentés par des courants alternatifs avec modulation de phase et de fréquence, afin de faire varier de façon continue la vitesse des bagues et les vitesses relatives entre elles et donc les rapports d'étirage longitudinal du film ; les rapports d'étirage transversal étant régulés en intervenant sur la divergence des rails sur lesquels les pinces et les bagues coulissent ;
le cadre d'étirage comprend une ou plusieurs sections placées à l'intérieur d'un four ayant des températures comprises dans la plage d'environ 150 °C à 190 °C, et une ou plusieurs sections placées dans un four à des températures comprises entre environ 130 °C et 140 °C, les rapports d'étirage longitudinal étant compris dans la plage allant d'environ 4:1 à environ 9:1, de préférence de 5,5:1 à 8,5:1 , et les rapports d'étirage transversal étant compris dans la plage allant d'environ 3:1 à environ 8,5:1, de préférence de 5,5:1 à 8,5:1 ;
- polarisation de la couche b) du film obtenu.

10. Procédé selon la revendication 9, dans lequel la polarisation de la couche de film b) est réalisée en utilisant un équipement pour un traitement corona ou un traitement au plasma.

11. Procédé selon la revendication 10, dans lequel la polarisation de la couche de film b) est réalisée par traitement corona avec des décharges électriques ayant une intensité de 40 à 60 W/cm.

12. Utilisation de films simultanément coextrudés et biorientés selon les revendications 1 à 8, pour le revêtement protecteur d'articles fabriqués ayant des surfaces planes se composant de feuilles de verre, de métal et de polymère thermodurcissable, et d'élastomères thermoplastiques.

13. Feuilles ayant des surfaces planes comprenant du verre, des feuilles métalliques, des polymères thermodurcissables, des élastomères thermoplastiques, enduites avec les films selon les revendications 1 à 8.

14. Articles fabriqués pouvant être obtenus à partir de feuilles selon la revendication 13.
